# EUROPEAN PATENT APPLICATION

(11) **EP 3 098 143 A1**
(43) Date of publication of application: **30.11.2016**
(21) Application number: 15169202.7
(22) Date of filing: 26.05.2015
(51) Int. Cl.: B62D 35/00, B62D 37/02

(54) **SPOILER WITH AN ACTIVE MATERIAL AND A FLEXIBLE SURFACE**

(71) Applicant: SMR Patents S.à.r.l., 1653 Luxembourg (LU)
(72) Inventor: Hermann, Andreas, 71364 Winnenden-Baach (DE); Erhart, Volker, 73257 Köngen (DE)
(74) Representative: Weber-Bruls, Dorothée

(57) **Abstract**

The present invention relates to a spoiler for a vehicle for optimizing airflow. The spoiler comprises a flexible surface layer 1 which is reversibly deformable, a stamp 2 for deforming the flexible surface layer 1 and an active material 3. The stamp 2 translates along a straight line between a retracted and a deployed position. The active material 3 moves the stamp along the straight line.

## Description

### FIELD OF THE INVENTION

The invention relates to a spoiler for use in an automotive environment for optimizing the airflow of a vehicle. The spoiler is activated via an active material, such as a shape memory material, and is covered by a flexible layer.

### BACKGROUND OF THE INVENTION

The use of spoilers is well known in the automotive environment not only for optimizing driving characteristics, such as an improved traction by increasing the downward force of a vehicle, but also for optimizing the air flow, e.g. for optimizing the wind resistance and thereby minimizing the energy consumption. Spoilers are not only provided on the front and heck portion of a vehicle. Also other parts of a vehicle, such as rear-view mirrors, may comprise spoilers, e.g. for minimizing air turbulences and respective noise.

Spoilers usually have a fixed geometry and can be retractable. Retractable spoilers require actuator elements for deploying and retracting the spoiler and are visible even when in a retracted state due to gaps between the retracted spoiler and the surrounding structure such as a rear part of a car. Said gaps cause air turbulences and respective noise. Also, the actuators cause noise when activated to move the spoiler.

The invention aims at providing an improved spoiler which produces less noise and is less complex as known spoilers.

### SUMMARY OF THE INVENTION

The invention provides a spoiler, e.g. for a vehicle for optimizing airflow. The spoiler comprises a flexible surface layer, a stamp for deforming the flexible surface layer and an active material for moving the stamp. The flexible surface layer is reversibly deformable and the stamp deforms the flexible surface layer within a certain limit, namely to ensure that the deformation is reversible. The stamp translates along a substantially straight line and between a retracted and a deployed position. The stamp may not only stay in the final positions "retracted" and "deployed" but also at any intermediate position, e.g. depending on one or more parameters such as vehicle speed and/or air pressure and/or air turbulences. The active material is adapted to directly or indirectly move the stamp along the straight line.

Moving the stamp along a substantially straight line means that a rotation of the stamp in relation to the flexible surface layer is to be avoided. In this way it is possible to reduce friction between the stamp and the flexible surface layer. This results, i.a., in an increased lifetime of the flexible surface layer and may also help to reduce the energy necessary to deform the flexible surface layer. Further, the stamp may have a complexly curved surface which can be better reproduced by the flexible surface layer if the stamp is translated rather than rotated.

The active material is especially to be based on shape memory materials such as electroactive polymers, also known as EAPs. The active material may be composed of interpenetrating polymer network (IPN), and/or conducting polymers (CP), and/or dielectric polymers or be based on carbon materials like carbon nanotubes (CNTs), carbide derived carbon (CDC) and/or graphene and /or be based on Nafion or other ionomers. The active material based on electroactive polymers (EAP) may be ionic or electric in nature. The active material can also be bi-metal actuator or ionic polymer metal composite (IPMC).

The use of active material helps to reduce noise when moving the stamp as compared to known actuators. Also, the use of active material helps to reduce the number of parts necessary for a spoiler. In addition, the use of a flexible surface layer as covering and the elimination of respective gaps or openings helps to avoid that dirt can enter the spoiler.

The stamp itself may comprise at least some of the active material. In this case only a part of the stamp may translate along a substantially straight line, preferably the part being in contact with the flexible surface layer.

The active material may be provided on one side of the stamp which is opposite from the flexible surface layer. In this way the active material contacts the stamp and may move the stamp.

The active material may be adapted to move an intermediate means which is adapted to move the stamp along the straight line. That is, the active material does not directly but indirectly move the stamp. The intermediate means may have a gear function, e.g. covert a small movement of the active material in a larger movement of the stamp. The gear function may be linear or non-linear.

The active material may also be located on two or more positions in the spoiler, e.g. the stamp may comprise active material and additional active material may be provided on the stamp side opposite from the flexible surface layer. Also, the stamp side which contacts the flexible surface layer may comprise active material, e.g. to change the surface of the flexible surface layer.

At least one surface of the stamp can be flat or curved. The surface of the stamp which can contact the flexible surface layer and/or the opposite stamp surface may be flat or curved. The surface of the stamp which can contact the flexible surface layer may be a complex surface and the flexible surface layer may be deformed accordingly, i.e. the flexible surface layer may at least partially reproduce the shape of the stamp surface.

The spoiler according to the invention may be completely retractable. In a retracted position of the stamp the flexible surface layer may be undeformed such that the completely retracted spoiler is substantially invisible to an observer. Alternatively, the stamp still deforms the flexible surface layer in a retracted position but less than in a deployed position. That is, an observer may only see the slightly deformed or undeformed flexible surface layer which may be opaque and/or form a common surface with the surrounding structure such as a part of a vehicle.

The invention also relates to a system, e.g. for a vehicle, comprising a spoiler according to the invention as well as an activation unit for activating the active material of the spoiler to translate the stamp between retracted and deployed and/or any intermediate position. The system may comprise a sensor unit for generating control signals for the activation unit. The sensor unit may be adapted to measure one or more of vehicle speed, air pressure and air turbulences. The system may be adapted to perform an ongoing adaptation of the spoiler stamp position to optimize airflow. For example, the stamp in a spoiler according to the invention on a vehicle may be retracted at slow speed, move to a first deployed position at medium speed, and move to a second deployed position at high speed. The spoiler stamp may be controlled to move to two, three, four, five, six or more discrete positions. Alternatively, the position of the spoiler stamp may be controlled continuously, i.e. no discrete positions.

The invention also relates to a vehicle comprising the spoiler according to the invention. The invention also relates to a rear view mirror for a vehicle comprising the spoiler according to the invention.

### BRIEF DESCRIPTION OF THE DRAWINGS

The following schematic drawings show aspects of the invention for improving the understanding of the invention in connection with some exemplary illustrations, wherein
- Figure 1: shows a schematic cross sectional view of a spoiler according to the invention;
- Figure 2a, 2b: shows a schematic cross sectional view of a stamp of a spoiler according to the invention;
- Figure 3: shows a schematic cross sectional view of a spoiler according to the invention with an intermediate member.

### DETAILED DESCRIPTION

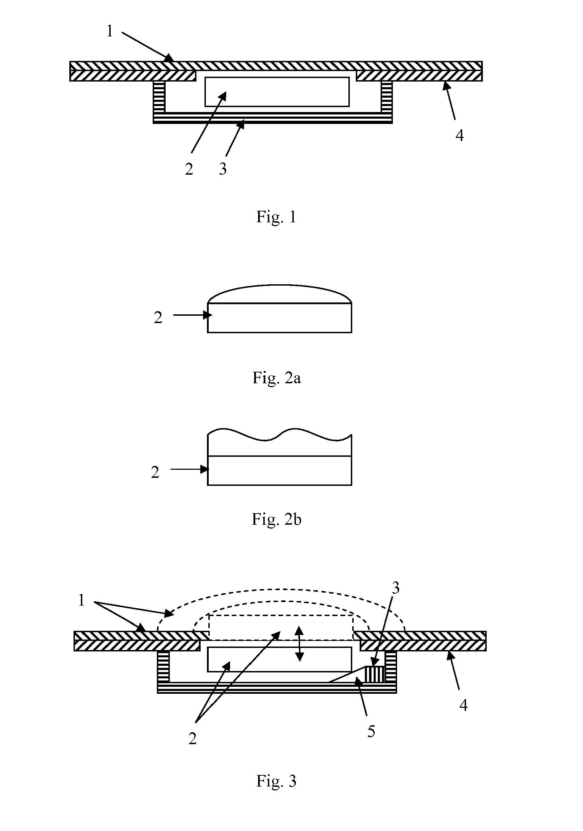

The spoiler as illustrated in figure 1 shows a flexible surface layer 1 which is applied to a structural part 4 such as a frame, e.g. of a front, rear or side portion of a vehicle or a rear-view mirror of a vehicle. A movable stamp 2 translates between a retracted position as illustrated and a deployed position (see dashed lines in figure 3). The structural part 4 has an opening so that the stamp 2 can contact and deform the flexible surface layer 1. The stamp 2 is driven by an active material 3 which may be provided externally to the stamp 2, e.g. on the side of the stamp 2 which is opposite from the flexible surface layer 1. The active material 3 can be controlled to deform in order to move the stamp 2 in a desired manner.

Figures 2a and 2b show schematic cross sectional views of a stamp 2 of a spoiler according to the invention. The stamp 2 of figure 2a has a surface which is elliptically like curved. If the stamp 2 is orientated such that the latter surface contacts the flexible surface layer 1, the flexible surface layer may reproduce the shape of the stamp 2 when the latter is in a deployed position. In other words, the flexible surface layer 1 at least partially assumes the shape of the elliptically like curve. The same is true for other surfaces like the one shown in figure 2b. It is noted that much more complex surfaces are possible, basically due to the fact that stamp 2 translates between the retracted and deployed position instead of rotating.

In figure 3 a schematic cross sectional view of a spoiler according to the invention with an intermediate member 5 is illustrated. The active material 3 is located to move the intermediate member 5. The intermediate member 5 in turn moves the stamp 2 between the retracted and deployed position (dashed lines). For example, the intermediate member 5 is v-shaped and adapted to covert a small movement of the active material 3 into a larger movement of the stamp 2. The intermediate member 5 can be designed such that a movement of the active material 3 is translated in a linear manner or in a non-linear member.

### Reference Signs

- 1: flexible surface layer
- 2: stamp
- 3: active material
- 4: structural part
- 5: intermediate means

## Claims

1. A spoiler for a vehicle for optimizing airflow, the spoiler comprising:
a flexible surface layer (1) which is reversibly deformable;
a stamp (2) for deforming the flexible surface layer (1), wherein the stamp (2) translates along a straight line between a retracted and a deployed position;
an active material (3) for moving the stamp (2) along the straight line.

2. The spoiler of claim 1, wherein the stamp comprises the active material.

3. The spoiler of claim 1 or 2, wherein the active material (3) is provided on one side of the stamp (2) which is opposite from the flexible surface layer (1).

4. The spoiler of any of the preceding claims, wherein the active material (3) is adapted to move an intermediate means (5) which is adapted to move the stamp (2) along the straight line, optionally wherein the intermediate means (5) is a gear.

5. The spoiler of any of the preceding claims, wherein the active material (3) comprises one or more of a shape memory material, shape memory alloy material, electroactive polymers, interpenetrating polymer network, conducting polymers, dielectric polymers, carbon materials, carbon nanotubes, carbide derived carbon, graphene, bi-metal, ionic polymer metal composite, nafion or other ionomers, wherein electroactive polymers may be ionic or electric in nature.

6. The spoiler of any of the preceding claims, wherein a surface of the stamp (2) which can contact the flexible surface layer (1) is flat or curved.

7. The spoiler of any of the preceding claims, wherein the spoiler is completely retractable.

8. The spoiler of claim 7, wherein in a retracted position of the stamp (2) the flexible surface layer (1) is not deformed such that the completely retracted spoiler is substantially invisible to an observer.

9. A system for a vehicle comprising a spoiler of any of claims 1 to 8 and an activation unit for activating the active material (3) of the spoiler to translate the spoiler between the retracted deployed positions.

10. The system of claim 9, further comprising a sensor unit for generating control signals for the activation unit.

11. The system of claim 10, wherein the sensor unit is adapted to measure one or more of vehicle speed, air pressure and air turbulences.

12. The system of any of claims 9 to 11, wherein the system is adapted to perform an ongoing adaptation of the stamp position to optimize airflow.

13. Vehicle comprising a spoiler of any of claims 1 to 8.

14. Rear view mirror for a vehicle comprising a spoiler of any of claims 1 to 8.
